# FASCICULE DE BREVET EUROPEEN

(11) **EP 3 898 180 B1**
(45) Date de publication et mention de la délivrance du brevet: **18.10.2023**
(21) Numéro de dépôt: 19845772.3
(22) Date de dépôt: 17.12.2019
(51) Int. Cl.: B29C 64/112, B29C 64/209, B29C 64/232, B29C 64/393

(54) **SYSTÈME POUR DÉPOSER DE MANIÈRE CONTRÔLÉE UN FLUIDE SUR UN SUBSTRAT**
SYSTEM ZUR KONTROLLIERTEN ABSCHEIDUNG EINES FLUIDS AUF EINEM SUBSTRAT
SYSTEM FOR CONTROLLED DEPOSITING OF A FLUID ON A SUBSTRATE

(30) Priorité: 18.12.2018 FR 1873249
(43) Date de publication de la demande: 27.10.2021
(73) Titulaire: Paris Sciences et Lettres, 75006 Paris (FR); Centre national de la recherche scientifique, 75016 Paris (FR); SORBONNE UNIVERSITE, 75006 Paris (FR); Université Paris Cité, 75006 Paris (FR)
(72) Inventeur: SIRIA, Alessandro, 75012 PARIS (FR); NIGUES, Antoine, 75005 PARIS (FR); JUBIN, Laetitia, 75011 PARIS (FR); BOCQUET, Lydéric, 75013 PARIS (FR)
(74) Mandataire: Novagraaf Technologies
(86) Numéro de dépôt international: PCT/FR2019/053129
(87) Numéro de publication internationale: WO 2020/128310

(56) Documents cités:
- US-A1- 2005 266 149
- US-A1- 2018 297 270

## Description

La présente invention se rapporte à un système pour déposer un fluide de manière à obtenir des couches nanométriques.

Plus précisément, l'invention concerne un système pour déposer de manière contrôlée un fluide sur un substrat, un procédé de dépôt d'un fluide sur un substrat, une utilisation du système pour la fabrication additive et un produit obtenu par le procédé.

La fabrication additive est un terme générique qui englobe diverses techniques basées sur le dépôt couche par couche. On peut distinguer deux grandes familles de fabrication additive : les techniques d'impression directes, et les techniques dites indirectes. Les premières consistent à déposer le matériau désiré directement sur un substrat. Les techniques indirectes utilisent une source d'énergie, tel un laser ou une lampe UV pour agir sur un bain du matériau désiré.

La fabrication additive connaît une importante croissance, ce qui modifie considérablement la façon dont les industries conçoivent leur processus de fabrication. Aujourd'hui il existe plusieurs techniques de fabrication additive permettant d'obtenir des objets dans une gamme de taille entre le millimètre et le mètre. Des efforts ont été effectués pour descendre en dessous du millimètre.

Il est connu de l'homme du métier, comme technique d'impression indirecte pour déposer un fluide, la polymérisation à deux photons qui permet d'imprimer des objets en utilisant un laser sur une résine photopolymérisable. Cette résine doit être transparente à la longueur d'onde du laser afin de permettre la réaction chimique qui génère la polymérisation. La résolution de cette technique peut atteindre la moitié de la longueur d'onde du laser, soit une centaine de nanomètres. Cette technique possède l'avantage de pouvoir fabriquer des objets complexes avec grande précision, entre autres grâce à la précision de déplacement du laser. Cependant, elle reste une technique contraignante, d'une part à cause du dispositif complexe, mais aussi à cause des contraintes sur le matériau utilisé, qui doit nécessairement être photopolymérisable.

Comme autre technique d'impression indirecte, il y a également la technique de Croissance Assistée par Faisceau d'Électrons (désigné communément sous l'acronyme anglais FEBID) qui permet de déposer des matériaux en bombardant d'électron un gaz précurseur du matériau désiré afin qu'il se dépose sur un substrat. C'est une technique qui peut être installée à l'intérieur d'un microscope électronique à balayage par exemple. En focalisant le faisceau d'électron sur un spot de très faible taille (moins de 1 nm), la FEBID permet d'obtenir des résolutions de l'ordre du nanomètre. Même si cette technique est caractérisée par une résolution potentielle inégalée, et une possibilité de produire des objets complexes avec une caractérisation in situ, elle n'est aujourd'hui pas tout à fait au point sur la précision du dépôt. En effet, l'interaction entre le faisceau d'électron et le précurseur volatile est difficile à contrôler, générant un dépôt qui est souvent d'une taille supérieure à la précision du focus. Aussi, il est impératif de trouver le précurseur adapté aux conditions d'utilisations du dispositif pour pouvoir déposer, ce qui a pour conséquence de significativement réduire les possibilités de matériaux de fabrication.

Plus récemment, des techniques utilisant des pointes de sondes locales (AFM ou STM) ont permis d'atteindre des résolutions plus proches de la centaine de nanomètre comme indiqué par exemple, dans les références brevets US 2005 266 149 A1, WO 2017/106199 et US 2017/0259498.

Ces dernières techniques sont toutes des techniques d'impression directes, utilisant la précision de déplacement et la résolution spatiale des techniques de sondes locales pour déposer des matériaux liquides sur différents substrats. Ces techniques permettent le dépôt de matériaux très divers avec des solvants variés :
- différents types de polymères ;
- des molécules biologiques (peptides, ADN, enzymes...) ;
- des colloïdes divers.

Dans un cas de figure, la pointe AFM est utilisée comme un stylo à plumes : elle est trempée avant chaque dépôt dans une goutte du matériel déposé. Dans un autre cas de figure, la pointe est chargée d'une petite quantité du matériau liquide désiré avant déposition. Cependant, même si les résolutions sont très élevées, les deux approches représentent un inconvénient majeur, puisque qu'il n'est pas possible d'effectuer une impression en continue en l'absence de réservoir présentant un volume suffisant. Aussi, la précision du dépôt obtenu est insuffisante puisqu'il n'existe pas de paramètres permettant de contrôler le flux de matériau de ou à travers la pointe.

Il existe donc un besoin d'une fabrication additive, présentant des couches définies par des épaisseurs inférieures à 100 nm, capable de déposer une grande variété de matériaux, avec des paramètres ajustables permettant de contrôler le dépôt, et un réservoir suffisamment grand pour la fabrication d'un ou plusieurs objets sans interruption.

Pour résoudre un ou plusieurs des inconvénients cités précédemment, selon 1 invention, divulguée dans la revendication1, le système pour déposer de manière contrôlée un fluide sur un substrat comprend :
- un nanoinjecteur comprenant :
   ▪ un réservoir destiné à stocker le fluide,
   ▪ une protubérance non déformable et présentant un orifice d'éjection pour extraire le fluide du réservoir,
- un résonateur mécanique fixé au nanoinjecteur, le résonateur mécanique étant adapté à détecter un contact entre la protubérance et le substrat,
- un moyen de contrôle du résonateur mécanique relié à :
- un moyen excitateur du résonateur mécanique adapté à faire osciller le résonateur mécanique à une fréquence d'oscillation, de sorte que la protubérance oscille entre une position basse à laquelle la protubérance est en contact avec le substrat et une position haute à laquelle la protubérance et le substrat ne sont pas en contact, à
- un moyen détecteur adapté à détecter l'oscillation du résonateur mécanique, et à
- un moyen régulateur adapté à ajuster le contact entre la protubérance et le substrat en contrôlant l'oscillation du résonateur mécanique, le moyen régulateur étant relié à un premier moyen de déplacement adapté au moins à rapprocher ou éloigner le substrat du nanoinjecteur.

Par fluide, on entend, au sens de la présente invention, un liquide ou un gel pouvant s'écouler sous une valeur de contrainte supérieure à sa contrainte seuil, le fluide pouvant comprendre ou non des espèces en suspension. Par exemple, comme fluide on peut utiliser de l'eau, une solution saline, une huile végétale, une huile de silicone, une résine pour lithographie optique (SU8 etc.), un liquide ionique, des brins d'ADN-ARN, des nanoparticules (colloïdes ou autres) de métaux précieux comme l'or et l'argent, divers matériaux biologiques comme du collagène, des polysaccharides, des protéines, des matériaux céramiques comme la zircone, l'alumine, l'hydroxyde d'aluminium, le dioxyde de titane, à condition toujours que la taille de particules permette au fluide de passer par l'orifice d'éjection du nanoinjecteur. Par exemple, l'orifice d'éjection peut par être 7 à 10 fois supérieure au diamètre des particules compris dans le fluide à déposer.

Par exemple, les espèces en suspension peuvent être des espèces colloïdales, des espèces polymériques en solution, etc.

Par substrat, on entend au sens de la présente invention, un support pouvant être plan, structuré ou présentant un rayon de courbure.

Par exemple, comme support structuré, on peut avoir un support présentant une forme de créneau, une forme de demi-sphère, une forme courbée, une forme en dents de scie, une forme pointue, etc.

Par nanoinjecteur, on entend, au sens de la présente invention, un injecteur comprenant un orifice d'éjection présentant un diamètre inférieur à 1 µm.

Par orifice d'éjection, on entend, au sens de la présente invention, un orifice au travers duquel est éjecté le fluide du nanoinjecteur pour être ensuite déposé sur le substrat, les diamètres intérieur et extérieur de cet orifice étant adapté au dépôt que l'on souhaite obtenir.

Il est à noter que le diamètre extérieur influence également, en sus du diamètre intérieur de l'orifice d'éjection, le dépôt. En effet, le diamètre extérieur de l'orifice d'éjection influe sur le ménisque de fluide formé entre la protubérance et le substrat lors de la mise en contact de la protubérance avec le substrat. De préférence, le rapport entre le diamètre intérieur et le diamètre extérieur de l'orifice d'éjection est compris entre 0.8 et 1. Le dépôt du fluide sur le substrat est garanti si le ménisque se forme lors du contact entre la protubérance, en particulier lors du contact d'une paroi située entre le diamètre intérieur et le diamètre extérieur de l'orifice d'éjection, et le substrat. Par ailleurs, avec un rapport entre le diamètre intérieur et le diamètre extérieur de l'orifice d'éjection compris entre 0.8 et 1, le ménisque est davantage stable de manière à garantir le dépôt entre la position basse et la position haute de la protubérance. Le dépôt et la stabilité sont favorisés lorsque que le rapport entre le diamètre intérieur et le diamètre extérieur de l'orifice d'éjection se rapproche de 1, c'est-à-dire lorsque la paroi située entre le diamètre intérieur et le diamètre extérieur de l'orifice d'éjection présente une épaisseur la plus fine possible.

Il est à noter que l'orifice d'éjection a une taille variable dans la conception. Aussi, l'orifice d'éjection peut présenter une section de toute forme, par exemple carrée, rectangulaire, ovale, circulaire, etc. Par exemple, la protubérance et le nanoinjecteur peuvent être monobloc de sorte que la protubérance peut alors faire partie intégrante du nanoinjecteur et donc former un monobloc avec le réservoir et être de forme conique par exemple. On peut dans ce cas avoir un nanocapillaire présentant une forme conique à son extrémité par laquelle on souhaite déposer le fluide par l'intermédiaire de l'orifice d'éjection. Il est à noter que la forme peut ne pas être conique et peut présenter un orifice d'éjection de forme prédéfinie et présentant, par exemple, un diamètre d'orifice d'éjection souhaité et ajustable en fonction des paramètres relatifs à sa conception.

Il est à noter que le réservoir peut présenter une forme longitudinale, par exemple cylindrique, présentant à chacune de ses extrémités une ouverture, une première ouverture reliée directement ou indirectement à la protubérance, et une deuxième ouverture par laquelle il est possible d'alimenter le réservoir.

Par ailleurs, il est à noter que le réservoir et la protubérance du nanoinjecteur ne forment pas nécessairement un monobloc et peuvent être dissociés ou désolidarisés de sorte à ce que l'on puisse interchanger la protubérance ou le réservoir du nanoinjecteur. Il est à noter également que le résonateur mécanique, le moyen de contrôle, le moyen excitateur, le moyen détecteur et le moyen régulateur sont chacun interchangeables individuellement.

Par ailleurs, la protubérance peut, de préférence, être fonctionnalisée.

Par protubérance fonctionnalisée, on entend, au sens de la présente invention, une protubérance présentant un orifice d'éjection dont sa géométrie initiale dépendante de la géométrie de la protubérance est modifiée par l'ajout d'un élément dans la protubérance. Ainsi, il est possible d'ajuster les diamètres intérieur et/ou extérieur de l'orifice d'éjection de la protubérance en rajoutant un élément dans la protubérance de manière à pouvoir modifier la géométrie de l'orifice d'éjection en fonction des applications souhaitées, la fonctionnalisation étant réalisé avant la mise en fonctionnement du système. Par exemple, on peut obtenir différentes protubérances fonctionnalisées par l'insertion, dans la protubérance, de nanotubes dont une extrémité fait saillie à la surface la protubérance de manière à constituer l'orifice d'éjection, le nanototube étant fixé, avec de la colle par exemple, à la protubérance. Les nanotubes peuvent présenter des diamètres différents et peuvent être en carbone, nitrure de bore, disulfure de molybdène, silicium. Par exemple, le nanotube peut présenter une longueur comprise entre 1 µm et 2 µm, un diamètre extérieur compris entre 60 nm et 200 nm, un diamètre intérieur compris entre 5 et 50 nm. Un autre exemple de protubérance fonctionnalisée peut être une protubérance recouverte d'un matériau noble tel que l'or pour protéger le fluide des rayons UV par exemple.

De préférence, l'orifice d'éjection peut présenter un diamètre intérieur compris entre 5 et 300 nm.

Par protubérance non déformable, on entend, au sens de la présente invention, une protubérance présentant des dimensions stables dans les conditions d'utilisation du système au cours du dépôt.

Par résonateur mécanique fixé audit nanoinjecteur, on entend, au sens de la présente invention, un résonateur mécanique présentant un contact avec le nanoinjecteur de sorte que l'oscillation du résonateur mécanique se répercute sur le nanoinjecteur.

Par moyen de contrôle, on entend, au sens de la présente invention, un moyen adapté, d'une part, à mesurer l'écart d'oscillation entre l'oscillation du résonateur mécanique et l'oscillation de consigne transmise par le moyen excitateur au résonateur mécanique et d'autre part à mesurer la variation d'oscillation due au contact entre la protubérance et le substrat.

Par exemple, comme moyen de contrôle, on peut avoir un oscilloscope comprenant ou non un correcteur proportionnel (communément désigné par correcteur P), un correcteur proportionnel intégrale (communément désigné par correcteur PI) ou encore un correcteur proportionnel intégrale dérivé (communément désigné par correcteur PID) de manière à améliorer l'asservissement de façon à ce que le résonateur mécanique oscille selon l'oscillation de consigne.

Par exemple, comme moyen excitateur, on peut avoir un excitateur piézoélectrique, magnétique ou encore acoustique tel qu'un haut-parleur.

Par exemple, comme moyen détecteur, on peut avoir un dispositif comprenant un Microsystème électro mécanique tel qu'un accéléromètre, une fibre optique ou encore un laser.

De préférence, le moyen détecteur peut présenter une raideur inférieure ou égale à 10⁵ N/m et est fonction du matériau ou des matériaux constitutifs du nanoinjecteur.

Les matériaux constitutifs du nanoinjecteur doivent être résistant au fluide à déposer. Par exemple, si l'on souhaite déposer une fluide qui comprend des acides forts comme l'acide chlorhydrique, l'acide sulfurique, l'acide fluorhydrique, l'acide nitrique, ou l'acide phosphorique, sur un substrat comprenant de l'arséniure de gallium, de le dioxyde de silicium, de l'alumine, de la zircone ou encore du nitrure de bore, le nanoinjecteur peut être composé de matériaux plastiques comme le polyéthylène haute densité, le polypropylène, le polychlorure de vinyle, le polyfluorure de vinylidène, ou encore le polyetheretherketone.

Par moyen régulateur adapté à contrôler le contact entre la protubérance et le substrat, on entend, au sens de la présente invention, un moyen adapté à contrôler la force d'interaction du substrat contre la protubérance lorsqu'il y a contact entre ces deux éléments.

Par exemple, comme moyen régulateur, on peut avoir un moyen comprenant un correcteur proportionnel (communément désigné par correcteur P), un correcteur proportionnel intégrale (communément désigné par correcteur PI) ou encore un correcteur proportionnel intégrale dérivé (communément désigné par correcteur PID).

Par premier moyen de déplacement adapté au moins à rapprocher ou éloigner le substrat du nanoinjecteur, on entend, au sens de la présente invention, un moyen adapté à déplacer le substrat de manière à le rapprocher ou l'éloigner du nanoinjecteur selon un axe z pour contrôler le contact entre le substrat et la protubérance.

Le premier moyen de déplacement peut être relié à un deuxième moyen de déplacement adapté à déplacer le substrat selon les axes x, y orthogonaux à l'axe z pour la réalisation d'un motif, les trois axes orthogonaux x, y et z formant un trièdre direct. Ainsi, le premier moyen de déplacement permet de réguler le contact entre la protubérance et le substrat et le deuxième moyen de déplacement permet de réaliser un motif prédéfini.

De préférence, le premier moyen de déplacement et le deuxième moyen de déplacement sont compris dans un unique système de déplacement.

De préférence, le premier moyen de déplacement et/ou ledit deuxième moyen de déplacement comprennent un moteur piézoélectrique présentant une résolution subnanométrique.

De préférence, le réservoir peut être relié à un réservoir externe. Ainsi, le volume de fluide à déposer est ajustable.

Un autre objet de l'invention consiste en un procédé de dépôt d'un fluide sur un substrat, le procédé comprenant les étapes suivantes :
a) fournir un système tel que défini précédemment,
b) mettre en oscillation contrôlée la protubérance par excitation du résonateur mécanique par le moyen excitateur pour mettre le résonateur mécanique en oscillation à une fréquence d'oscillation, l'oscillation du résonateur mécanique se répercutant sur la protubérance,
c) rapprocher le substrat de la protubérance à l'aide du premier moyen de déplacement de manière à former un contact dynamique entre le substrat et la protubérance, la protubérance oscillant entre une position basse à laquelle la protubérance est en contact avec le substrat et une position haute à laquelle la protubérance et le substrat ne sont pas en contact,
d) détecter l'oscillation du résonateur mécanique par le moyen détecteur pour observer des variations d'oscillations lors du contact entre la protubérance et le substrat,
e) ajuster, à l'aide du moyen régulateur et en fonction des variations d'oscillations, le contact dynamique entre la protubérance et le substrat de manière à former un ménisque de fluide entre la protubérance et le substrat,
f) déposer le fluide sur le substrat via l'orifice d'éjection lors du contact entre la protubérance et le substrat.

Il est à noter que le système peut fonctionner selon la configuration selon laquelle le nanoinjecteur est positionné à la verticale, c'est-à-dire lorsque l'angle d'inclinaison entre la surface sur laquelle on souhaite déposer le fluide et la direction selon laquelle est disposée le nanoinjecteur est proche de 90°.

Il est à noter qu'il est possible, selon le procédé de l'invention, que deux au moins des étapes b), d), e) et f) soient mises en oeuvre simultanément.

Il est à noter que le dépôt peut être continu ou discontinu, que celui-ci peut être selon un motif prédéfini ou non qui soit reproductible ou non.

Par contact dynamique, on entend, au sens de la présente invention, un contact discontinu ou intermittent à la fréquence d'oscillation du résonateur mécanique.

Il est à noter qu'à l'aide du nanoinjecteur comprenant un orifice d'éjection inférieur à 1 µm, on peut obtenir un dépôt présentant une épaisseur comprise entre 1 % et 150% du diamètre de l'orifice d'éjection.

Par contrôle par le moyen de contrôle du résonateur mécanique, on entend, au sens de la présente invention, un contrôle consistant en l'analyse au moins de la fréquence d'oscillation et potentiellement également de paramètres supplémentaires relatifs aux oscillations telles que la fréquence, la phase d'amplitude, ou encore l'excitation des oscillations.

De préférence, l'écart entre ladite position basse et ladite position haute peut être comprise entre 1 nm et 1 µm.

De préférence, le système peut en outre comprendre une étape g) de balayage du nanoinjecteur sur le substrat suivant une trajectoire, modifiable en temps réel, pour réaliser une première couche.

Il est à noter que la trajectoire peut être prédéfinie de façon à réaliser un motif souhaité ou à suivre une quelconque direction.

Il est à noter également que la première couche peut être continue ou discontinue.

De préférence, l'étape de balayage g) peut être mise en oeuvre en maintenant le contact constant et prédéfinie entre la protubérance et le substrat.

De préférence, le système peut en outre comprendre une étape de solidification de la première couche. Cette étape de solidification permet de se prémunir d'une potentielle dissolution et/ou dégradation lors de la réalisation de la deuxième couche sur la première couche. Cette étape de solidification peut se faire selon une étape ultérieure ou bien en temps réel pendant le dépôt. Il est à noter que, cette étape est bien facultative car on pourrait simplement procéder au dépôt d'un fluide qui est intrinsèquement dur lorsqu'il est extrait du nanoinjecteur.

Il est à noter que la mise en oeuvre de l'étape de solidification est différente selon les propriétés du fluide déposé.

De préférence, l'étape g) de balayage du nanoinjecteur peut être mise en oeuvre avec une vitesse inférieure à 40 µm/s.

Il est à noter que pour favoriser la régularité du dépôt, on peut, par exemple, diminuer la vitesse de balayage, et/ou diminuer l'amplitude d'oscillation. Par ailleurs, on peut également utiliser un fluide comprenant des espèces en solution de faible granulométrie, c'est-à-dire inférieure à 10 fois l'amplitude de l'oscillation et inférieure à 10 fois l'épaisseur du dépôt souhaitée.

De préférence, le système peut comprendre en outre les étapes suivantes, après réalisation de l'étape g) de balayage du nanoinjecteur :
h) contrôle, par le moyen de contrôle du résonateur mécanique, au moins du contact entre la protubérance et la première couche et de la fréquence d'oscillation,
i) dépôt d'une deuxième couche sur la première couche,
j) répétition des étapes précédentes h) et i) jusqu'à obtenir une épaisseur souhaitée.

L'étape h) de contrôle permet d'assurer un contact doux entre la protubérance et la première couche afin d'éviter de détériorer cette première couche.

Un autre objet de l'invention concerne l'utilisation du système défini précédemment pour la fabrication additive.

Un autre objet de l'invention concerne un produit obtenu par le procédé défini précédemment, le produit comprenant une ou plusieurs couches uniformes et stables présentant une forme définie par une longueur supérieure ou égale à 1 µm.

Toutefois, avec notamment l'utilisation du réservoir extérieur relié au réservoir du nanoinjecteur, on pourrait déposer des couches présentant des longueurs bien plus importantes que 1 µm, par exemple de plusieurs kilomètres.

Il est à noter que la largeur minimale de la couche déposée est celle du diamètre extérieur de la protubérance et peut donc être comprise entre 0.5 nm et 100 µm par exemple, et de préférence entre 5 nm et 300 nm. Par ailleurs, il est à noter également que la hauteur de la couche déposée diminue lorsque la viscosité du fluide diminue, diminue lorsque la vitesse de balayage du nanoinjecteur diminue, augmente lorsque l'amplitude de l'oscillation augmente, et augmente lorsque le diamètre intérieur de la protubérance augmente.

Par exemple, le rapport maximal entre l'épaisseur et la largeur de la première couche peut être environ égal à 0.4.

De préférence, le produit obtenu peut comprendre plusieurs couches superposées.

Il est à noter que la stabilité du ménisque entre la position haute et la position basse peut être favorisée, par exemple, en diminuant la viscosité du fluide, en augmentant la perméabilité de la protubérance, c'est-à-dire en augmentant la capacité du fluide à s'écouler à travers la protubérance pour un forçage donné entre le réservoir et le ménisque, en augmentant la section interne de la protubérance, en augmentant l'affinité du fluide avec le matériau du substrat et avec le matériau extérieur de la protubérance, en utilisant des résonateurs à basse fréquence de résonnance afin de diminuer la fréquence d'oscillation de la protubérance et de diminuer l'amplitude de l'oscillation tout en pouvant la détecter.

Par forçage donné, on entend, au sens de la présente invention, l'application d'une pression contrôlée sur le fluide se trouvant dans le réservoir. Par exemple, ce forçage forcé peut être mise en oeuvre avec de l'air comprimé, mécaniquement avec un système de vérin/piston ou encore électriquement par l'application d'une tension entre le substrat et le nanoinjecteur.

Ainsi, il est possible à l'aide de l'invention d'imprimer de manière localisée pour la réalisation de connexions de circuits nanométriques, ou micrométriques.

L'invention sera mieux comprise à la lecture de la description qui suit, faite uniquement à titre d'exemple, et en référence aux figures suivantes annexées :
[Fig 1] qui représente un système selon un mode de réalisation préféré de l'invention,
[Fig 2] qui représente un diagramme présentant des étapes pouvant être mise en oeuvre pour le fonctionnement du système selon le mode de réalisation préféré de l'invention.

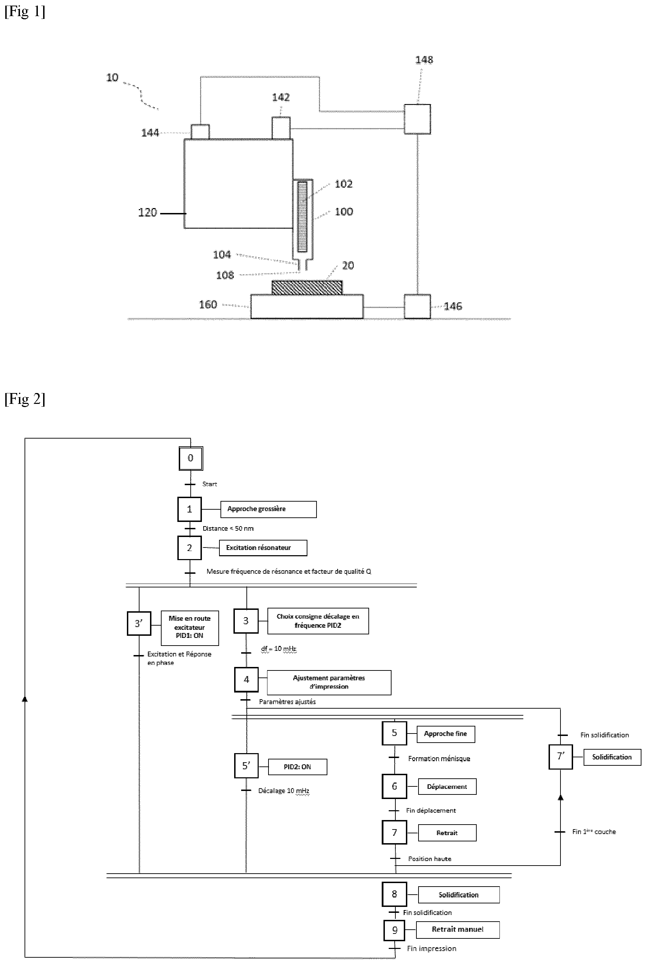

[Fig 1] illustre un système 10 pour déposer de manière contrôlée un fluide sur un substrat 20.

Par exemple, comme fluide on peut avoir tout type de fluide comme une solution de SU8 2002, une solution de SU 8 2010, un liquide ionique, un gel, ou encore une pâte.

Le substrat utilisé ici est un substrat plat présentant une rugosité inférieure au nanomètre.

Le système de [Fig 1] comprend un nanoinjecteur 100 comprenant un réservoir 102 destiné à stocker le fluide et une protubérance 104 non déformable et présentant un orifice d'éjection 108 pour extraire le fluide du réservoir 102.

Il est à noter, par exemple, que le réservoir 102 et le nanoinjecteur 100 de taille nanométrique peuvent être réalisés par tirage au laser, avec l'étireuse laser Sutter Instruments P-2000, d'un capillaire en verre de forme cylindrique présentant une longueur environ égale à 2 cm et un taraud conique de 2 mm de long. Après le tirage laser, le diamètre intérieur du capillaire varie de 0,5 mm à quelques dizaines de nanomètres à l'apex. Dans cette configuration, le nanoinjecteur 100 présente un tube destiné à stocker le fluide. Le tube présente une extrémité conique dans laquelle est inséré un nanotube présentant un orifice d'éjection 108 pour fonctionnaliser l'orifice d'éjection 108. Le tube peut alors être en verre et présenter un diamètre intérieur environ égal à 20 nm. Le nanotube peut être un nanotube de carbone de longueur environ égale 1 µm, et présentant un diamètre extérieur environ égal 20 nm et un diamètre intérieur environ égal à 1 nm.

Il est à noter que le réservoir 102, pour augmenter le volume de fluide à déposer mis à disposition, peut être relié à un réservoir externe (non illustré dans [Fig 1]).

Le système 10 comprend en outre un résonateur mécanique 120 fixé au nanoinjecteur 100.

Le résonateur mécanique 120 peut se présenter sous la forme d'un diapason dont le corps est vissé à sa base sur un bloc qui peut se déplacer selon les trois axes de l'espace par un système de vis micrométriques. Dans cette configuration, le nanoinjecteur 100 est collé, par exemple avec de la glue, sur une patte du diapason de sorte à ce que l'orifice d'éjection 108 est dirigé vers le bas, vers le substrat 20 qui est positionné sur un piezoscanner. Le corps du nanoinjecteur 100, utilisé comme réservoir 102, est rempli du fluide à déposer à l'aide d'une seringue micrométrique, le fluide remplissant également le taraud par capillarité. Par exemple, le diapason peut comprendre une branche qui peut être en aluminium et présenter un diamètre environ égal à 1 cm et une longueur environ égale à 10 cm. Le nanoinjecteur 100 peut être alors fixé à l'extrémité libre du diapason. Le diapason est conçu de sorte à pouvoir reproduire la même géométrie et le même rapport dimensionnel les différents éléments constituant les diapasons en quartz généralement utilisés en AFM.

Il est à noter qu'il est préférable que le résonateur mécanique 120 présente un facteur de qualité assez grand pour que la régulation du contact soit possible au décalage en fréquence désiré. Par exemple, on peut utiliser un résonateur mécanique 120 présentant un facteur de qualité de l'ordre de 10000 de manière à présenter un rapport entre la fréquence de résonance et le facteur de qualité compris entre 0.1 et 20.

Le système 10 comprend en outre un moyen de contrôle 148 du résonateur mécanique 120. Ce moyen de contrôle 148 permet de contrôler le dépôt de fluide sur le substrat 20.

Le moyen de contrôle 148, qui est un oscillateur comprenant un premier correcteur PID 1 dans ce mode de réalisation, est en particulier relié à un moyen excitateur 142 pour exciter le résonateur mécanique 120 pour faire osciller le résonateur mécanique 120 à une fréquence d'oscillation fi, de sorte que la protubérance 104 oscille entre une position basse à laquelle la protubérance 104 est en contact avec le substrat 20 et une position haute à laquelle la protubérance 104 et le substrat 20 ne sont pas en contact. Comme moyen excitateur 142, on a un excitateur piézoélectrique dans ce mode de réalisation. Cet excitateur piézoélectrique est collé sur le résonateur mécanique 120.

L'écart entre la position basse et la position haute dépend de toutes les caractéristiques du système, par exemple, de la nature de la protubérance, du fluide à déposer, de la fréquence d'oscillation, de la nature du substrat 20, ou encore de la vitesse de déplacement du substrat 20.

Le moyen de contrôle 148 est outre relié à un moyen détecteur 144 adapté à détecter l'oscillation du résonateur mécanique 120 de façon à lire la réponse du résonateur mécanique 120 à l'excitation du moyen excitateur 142. Le moyen détecteur 144 est, dans ce mode de réalisation, un accéléromètre qui est également collé sur le résonateur mécanique 120.

Le moyen de contrôle 148 est en outre relié à un moyen régulateur 146 adapté à ajuster le contact entre la protubérance 104 et le substrat 20 en contrôlant l'oscillation du résonateur mécanique 120.

Le moyen régulateur 146 est un deuxième correcteur PID 2 et permet l'ajustement du contact à l'aide du premier moyen de déplacement 160 auquel il est relié et qui est adapté à rapprocher ou éloigner le substrat 20 du nanoinjecteur 100 selon un axe z. En outre, le premier moyen de déplacement 160 est relié à un deuxième moyen de déplacement qui, ce dernier, est adapté à déplacer le substrat 20 selon des axes x et y, les trois axes x, y et z étant orthogonaux et formant un trièdre direct, pour permettre la réalisation d'un quelconque motif sur la surface du substrat. Pour garantir une grande précision, le premier moyen de déplacement 160 et/ou le deuxième moyen de déplacement comprennent un moteur piézoélectrique présentant une résolution subnanométrique. En particulier, le premier moyen de déplacement 160 et le deuxième moyen de déplacement peuvent être compris dans un unique système de déplacement. L'unique système de déplacement peut être, par exemple,, le piezoscanner sur lequel est déposé le substrat 20. Celui-ci présente une course maximum environ égale à 50 µm.

Par ailleurs, pour observer le rapprochement du nanoinjecteur 100 et du substrat 20, on peut en outre utiliser une caméra focalisée sur l'orifice d'éjection 108.

Il est à noter, dans ce mode de réalisation, que l'angle d'inclinaison du substrat entre le plan de déplacement du piezoscanner et le plan du substrat est inférieur à 5°.

Le procédé de mise en oeuvre du système illustré sur [Fig 1] pour déposer le fluide sur le substrat 20 est indiqué ci-après et fait référence à la [Fig 2].

Dans une étape préliminaire et facultative, étape 1 de [Fig 2], en utilisant la caméra focalisée sur l'orifice d'éjection 108, on approche avec la vis micrométrique du diapason, qui est le résonateur mécanique 120, la protubérance 104 du substrat 20 à une distance inférieure à 50 µm, qui correspond à la course maximum du piezoscanner, ce dernier permettra un rapprochement ultérieur entre ces deux éléments.

Dans une étape suivante, étape 2 de [Fig 2], on met en oscillation contrôlée la protubérance 104 par excitation du diapason par l'excitateur piézoélectrique pour mettre le diapason en oscillation à une fréquence d'oscillation fi. De cette façon, l'oscillation du diapason se répercute sur la protubérance 104.

Ainsi, dans une autre étape, étape 3' de [Fig 2], il est possible de mesurer la résonance du système constitué du diapason, de l'excitateur piézoélectrique et de l'accéléromètre de manière à déterminer la fréquence de résonance du diapason et son facteur de qualité. Le diapason est excité mécaniquement par l'excitateur piézoélectrique à sa résonance en mode normal de fréquence d'oscillation f0. L'oscillation est détectée, par l'accéléromètre, avec une sensibilité de résonance jusqu'à une amplitude de 0.5 nm, correspondant dans ce cas à l'amplitude minimale d'oscillation lors du fonctionnement du système, c'est-à-dire correspondant à l'écart minimal entre la position haute et la position faible.

Il est à noter, par exemple, que l'excitateur piézoélectrique peut être alimenté par un signal électrique dont la fréquence correspond à sa fréquence d'excitation mécanique. La fréquence de ce signal électrique est ajustée par le premier correcteur PID 1 pour contrôler l'oscillation du diapason de telle sorte que la réponse détectée du diapason par l'accéléromètre soit en phase avec le signal de l'excitateur piézoélectrique de façon à ce que le diapason oscille selon l'oscillation de l'excitateur piézoélectrique. La consigne de cette boucle de rétroaction est donc que le déphasage entre l'oscillation de l'excitateur piézoélectrique et celle du diapason est nul. Le diapason est alors en phase avec l'excitateur piézoélectrique. Le diapason est ainsi excité à sa fréquence de résonance, qui dépend de ses propriétés mécaniques mais aussi des interactions avec son environnement.

Dans une autre étape, étape 3 de [Fig 2] qui peut être mise en oeuvre en même temps que l'étape 3', on peut prédéfinir le déphasage d'oscillation de consigne du deuxième correcteur PID 2, ce déphasage correspondant au déphasage induit par le contact prédéfini entre la protubérance et le substrat 20. Par exemple, ce déphasage peut être de 10 mHz.

Ensuite, dans une autre étape, étape 4 de [Fig 2], on rapproche le substrat 20 de la protubérance 104 à l'aide du piezoscanner de manière à former un contact dynamique entre le substrat 20 et la protubérance 104. Ainsi, la protubérance 104 oscille entre une position basse à laquelle elle est en contact avec le substrat 20 et une position haute à laquelle elle est n'est pas en contact avec le substrat 20.

Il est à noter qu'entre temps, on détecte l'oscillation du diapason par l'accéléromètre pour observer des variations d'oscillations lors du contact entre la protubérance 104 et le substrat 20.

Ainsi, lors du contact entre la protubérance 104 et le substrat 20, les forces appliquées à l'ensemble constitué par le diapason et le nanoinjecteur 100, sont modifiées. Cette modification crée une modification de la fréquence de résonance, et donc de la fréquence d'excitation de l'excitateur piézoélectrique qui est maintenue à la fréquence de résonance du diapason. Par exemple, on choisit alors que le contact dynamique est atteint lorsque la fréquence de résonance de l'ensemble constitué par le diapason et le nanoinjecteur 100 est modifiée de 10 mHz, comme choisi à l'étape 3, par rapport à la fréquence d'excitation de l'excitateur piézoélectrique. On peut ainsi vérifier que le système n'est pas sujet à des dérives temporelles de la fréquence de résonance avant de passer aux étapes ultérieures.

On ajuste ensuite, étape 5 de [Fig 2], à l'aide du deuxième correcteur PID 2 et en fonction des variations d'oscillations, le contact dynamique entre la protubérance 104 et le substrat 20 de manière à former un ménisque de fluide entre la protubérance 104 et le substrat 20. Le substrat 20 est placé sur le piézoscanner à trois axes avec une résolution sub-nanométrique en déplacement (par exemple, le piézoscanner utilisé peut être le Tritor101 Piezosystemjena) sous le nanoinjecteur 100. Le deuxième correcteur PID 2 contrôle l'approche fine entre le substrat 20 placé sur le piézoscanner et le nanoinjecteur 100 grâce à une boucle de rétrocontrôle, jusqu'à ce que le contact entre la protubérance 104 et le substrat 20 soit atteint pour le déphasage de consigne de la fréquence de résonance de 10 mHz choisi antérieurement. La rigidité du diapason permet une approche contrôlée et permet de se prémunir d'effets rapides de type saut de la protubérance 104 au contact du substrat 20 à cause de ménisque entre la protubérance 104 et le substrat 20.

Dans une autre étape, on dépose le fluide sur le substrat 20 via l'orifice d'éjection 108 lors du contact entre la protubérance 104 et le substrat 20.

Ensuite, dans une étape subséquente, étape 6 de [Fig 2], on balaie, en déplaçant le substrat 20 par rapport au nanoinjecteur 100, le nanoinjecteur 100 sur le substrat 20 suivant une trajectoire, modifiable en temps réel, pour réaliser une première couche.

Le modèle de dépôt est réalisé en déplaçant le substrat 20 tout en maintenant l'interaction avec le nanoinjecteur constante grâce au deuxième correcteur PID 2 qui, dans une étape 5' de [Fig 2], régule et contrôle le contact entre la protubérance 104 et le substrat 20. La détection en temps réel de l'interaction entre le nanoinjecteur 100 et la surface du substrat 20 permet d'éviter tout dommage incontrôlé du substrat 20 et du nanoinjecteur 100.

On peut garder une consigne de l'ordre de 10 mHz, par exemple, pour le deuxième correcteur PID 2 où l'augmenter jusqu'à quelques Hz, à conditions que la protubérance 104 résiste à de telles forces de contact intermittent avec le substrat 20. On définit une trajectoire pour la protubérance 104 par rapport au substrat 20 par un contrôle électronique du piezoscanner relié au deuxième correcteur PID 2. On définit aussi la vitesse à laquelle cette trajectoire est parcourue. Ainsi, le balayage est mise en oeuvre en maintenant le contact constant et prédéfinie entre la protubérance 104 et le substrat 20. Le piezoscanner suit alors la trajectoire de consigne, à une vitesse consigne inférieure à 40 µm/s, et en maintenant le décalage en fréquence de 10 mHz à l'aide du deuxième correcteur PID 2 et du piézoscanner. La vitesse limite à ne pas dépasser est conditionné par la stabilité du ménisque lors de l'oscillation entre la position basse et la position haute.

Dans une autre étape, étape 7' ou 8 de [Fig 2], il est possible de solidifier la première couche. Par exemple, lorsque l'on dépose une encre polymérisable, on peut choisir d'exposer la première couche obtenue à une lumière UV avant le passage de déposer une deuxième couche sur celle-ci. Cette étape de solidification peut soit être réalisée simultanément au dépôt, soit ultérieurement.

Lorsque le dépôt est fini, dans une autre étape, étape 7 de [Fig 2], on peut retirer ou éloigner le substrat 20 du nanoinjecteur 100 en utilisant le piezoscanner de manière à interrompre le contact entre eux.

Ensuite, étape 9 de [Fig 2], on peut écarter grossièrement avec les vis micrométriques du diapason, la protubérance 104 du substrat 20, pour ensuite retirer le substrat 20 sur lequel a été déposée la première couche.

Avec un tel système et la mise en oeuvre d'un tel procédé, en utilisant :
- un nanoinjecteur comprenant un réservoir présentant un volume de 10 mm³ (réservoir de forme cylindrique présentant une section environ égale à 0.5 mm² et une longueur environ égale à 2 cm) et contenant une solution de SU8 2002 comme fluide et présentant une protubérance fonctionnalisée par l'insertion d'un nanotube en carbone présentant un orifice d'éjection présentant un diamètre intérieur environ égal à 50 nm et un diamètre extérieur environ égal à 180 nm,
- un diapason présentant un facteur de qualité environ égal à 1.4.10⁴ et oscillant à une fréquence environ égale à 1, 5 kHz et faisant osciller la protubérance entre une position haute et une position basse, chacune de ces positions étant écartée d'une distance inférieure à 10 nm,
- un substrat en silicium,
- une vitesse de déplacement du substrat environ égale à 0.125 µm/s,
on obtient une couche régulière et stable présentant une épaisseur environ égale à 30 nm et une largeur environ égale à 150 nm sur une longueur de plusieurs micromètres.

Dans les mêmes conditions que précédemment, avec une vitesse de déplacement du substrat environ égale à 0.5 µm/s, on obtient une couche d'encre régulière et stable présentant une épaisseur environ égale à 5 nm et une largeur environ égale à 150 nm.

Dans les mêmes conditions qu'indiquées précédemment, avec comme nanoinjecteur un nanoinjecteur présentant une protubérance fonctionnalisée par l'insertion d'un nanotube en carbone présentant un orifice d'éjection présentant un diamètre intérieur environ égal à 1 nm et un diamètre extérieur environ égal à 20 nm, on obtient une couche d'encre régulière et stable présentant une épaisseur environ égale à 700 pm et une largeur environ égale à 20 nm sur une longueur de plusieurs micromètres.

Dans un autre exemple, en utilisant :
- un nanocapillaire comme nanoinjecteur comprenant un réservoir présentant un volume de 3 mm³ et contenant une solution de SU8 2010 et ne présentant pas de protubérance fonctionnalisée, mais présentant un orifice d'éjection présentant un diamètre intérieur environ égal à 200 nm,
- un diapason présentant un facteur de qualité environ égal à 1.4.10⁴ et oscillant à une fréquence environ égale à 1,5 kHz et faisant osciller la protubérance entre une position haute et une position basse, chacune de ces positions étant écartée d'une distance environ égale à 1 nm,
- un substrat en silicium,
- une vitesse de déplacement du substrat inférieure à 40 µm/s,
on obtient une couche d'encre régulière et stable présentant une épaisseur environ égale à 35 nm et une largeur environ égale à 200 nm sur une longueur de plusieurs micromètres, environ 100 µm.

Encore dans un autre exemple, en utilisant :
- un nanoinjecteur comprenant un réservoir présentant un volume de 10 mm³ et contenant une solution ionique (par exemple celle connue sous la dénomination Bmim PF6) comme fluide et présentant une protubérance fonctionnalisée par l'insertion d'un nanotube en carbone présentant un orifice d'éjection présentant un diamètre intérieur environ égal à 60 nm et un diamètre extérieur environ égal à 5 nm,
- un diapason présentant un facteur de qualité environ égal à 1.4.10⁴ et oscillant à une fréquence environ égale à 1, 5 kHz et faisant osciller la protubérance entre une position haute et une position basse, chacune de ces positions étant écartée d'une distance inférieure à 50 nm,
- un substrat en silicium,
- une vitesse de déplacement du substrat comprise entre 1 et 4 µm/s,
on obtient une couche d'encre régulière et stable présentant une épaisseur environ égale à 0.5 nm et une largeur environ égale à 20 nm.

En mettant en oeuvre de tels exemples et selon des trajectoires prédéfinies, on peut réaliser des formes complexes comme des sinusoïdes ou encore des spirales, ou cercles.

On peut faire de la fabrication additive et réaliser des objets en trois dimensions à façon. En effet, on peut également empiler des couches les unes sur les autres, la première couche sur laquelle on vient en déposer une deuxième pouvant avoir été, au préalable, solidifiée par la mise en oeuvre d'un quelconque procédé de solidification. Par exemple, on peut empiler successivement une dizaine de couches présentant chacune une épaisseur environ égale à 100 nm de sorte à réaliser un empilement présentant la forme d'un cercle et présentant une épaisseur totale environ égale à 1.5 µm de haut et 8 µm de diamètre.

On peut également réaliser un croisement de deux couches de manière à former une croix avec un point d'intersection présentant une épaisseur de 300 nm, équivalent à deux fois 150 nm qui peut être l'épaisseur d'une unique couche, chaque couche présentant une largeur environ égale à 100 nm.

## Revendications

1. Système (10) pour déposer de manière contrôlée un fluide sur un substrat (20) pour la fabrication additive, ledit système comprenant :
- un nanoinjecteur (100) comprenant :
▪ un réservoir (102) destiné à stocker ledit fluide,
▪ une protubérance (104) non déformable et présentant un orifice d'éjection (108) pour extraire ledit fluide dudit réservoir (102),
- un résonateur mécanique (120) fixé audit nanoinjecteur (100), ledit résonateur mécanique (120) étant adapté à détecter un contact entre ladite protubérance (104) et ledit substrat (20),
- un moyen de contrôle (148) dudit résonateur mécanique (120) relié à :
- un moyen excitateur (142) dudit résonateur mécanique (120) adapté à faire osciller ledit résonateur mécanique (120) à une fréquence d'oscillation (fi), de sorte que ladite protubérance (104) oscille entre une position basse à laquelle ladite protubérance (104) est en contact avec ledit substrat (20) et une position haute à laquelle ladite protubérance (104) et ledit substrat (20) ne sont pas en contact, à
- un moyen détecteur (144) adapté à détecter ladite oscillation dudit résonateur mécanique (120), et à
- un moyen régulateur (146) adapté à ajuster ledit contact entre ladite protubérance (104) et ledit substrat (20) en contrôlant ladite oscillation dudit résonateur mécanique (120), ledit moyen régulateur (146) étant relié à un premier moyen de déplacement (160), pour la régulation, adapté au moins à rapprocher ou éloigner, selon un axe z, ledit substrat (20) dudit nanoinjecteur (100).

2. Système selon la revendication 1, selon lequel ladite protubérance (104) est fonctionnalisée.

3. Système selon les revendications 1 ou 2, selon lequel ledit orifice d'éjection (108) présente un diamètre intérieur compris entre 5 et 300 nm.

4. Système selon l'une quelconque des revendications 1 à 3, selon lequel ledit premier moyen de déplacement (160) est relié à un deuxième moyen de déplacement adapté à déplacer ledit substrat (20) selon des axes x, y orthogonaux audit axe z pour la réalisation d'un motif, lesdits trois axes orthogonaux x, y et z formant un trièdre direct.

5. Système selon la revendication 4, selon lequel le premier moyen de déplacement (160) et le deuxième moyen de déplacement peuvent être compris dans un unique système de déplacement.

6. Système selon l'une quelconque des revendications 1 à 5, selon lequel ledit premier moyen de déplacement (160) et/ou ledit deuxième moyen de déplacement comprennent un moteur piézoélectrique.

7. Système selon l'une quelconque des revendications 1 à 6, selon lequel ledit réservoir (102) est relié à un réservoir externe.

8. Procédé de dépôt d'un fluide sur un substrat pour la fabrication additive, ledit procédé comprenant les étapes suivantes :
a) fournir un système (10) tel que défini selon l'une quelconque des revendications 1 à 7,
b) mettre en oscillation contrôlée ladite protubérance (104) par excitation dudit résonateur mécanique (120) par ledit moyen excitateur (142) pour mettre ledit résonateur mécanique (120) en oscillation à une fréquence d'oscillation (fi), ladite oscillation dudit résonateur mécanique (120) se répercutant sur ladite protubérance (104),
c) rapprocher ledit substrat (20) de ladite protubérance (104) à l'aide dudit premier moyen de déplacement (160) de manière à former un contact dynamique entre ledit substrat (20) et ladite protubérance (104), ladite protubérance (104) oscillant entre une position basse à laquelle ladite protubérance (104) est en contact avec ledit substrat (20) et une position haute à laquelle ladite protubérance (104) et ledit substrat (20) ne sont pas en contact,
d) détecter ladite oscillation dudit résonateur mécanique (120) par ledit moyen détecteur (144) pour observer des variations d'oscillations lors du contact entre ladite protubérance (104) et ledit substrat (20),
e) ajuster, à l'aide dudit moyen régulateur (146) et en fonction des variations d'oscillations, le contact dynamique entre ladite protubérance (104) et ledit substrat (20) de manière à former un ménisque de fluide entre ladite protubérance (104) et ledit substrat (20),
f) déposer le fluide sur ledit substrat (20) via ledit orifice d'éjection (108) lors du contact entre ladite protubérance (104) et ledit substrat (20).

9. Procédé selon la revendication 8, comprenant en outre une étape g) de balayage dudit nanoinjecteur (100) sur ledit substrat (20) suivant une trajectoire, modifiable en temps réel, pour réaliser une première couche.

10. Procédé de dépôt selon la revendication 9, selon lequel ladite étape de balayage g) est mise en oeuvre en maintenant ledit contact constant et prédéfinie entre ladite protubérance (104) et ledit substrat (20).

11. Procédé de dépôt selon les revendications 9 ou 10, comprenant en outre une étape de solidification de ladite première couche.

12. Procédé de dépôt selon l'une quelconque des revendications 9 à 11, selon lequel l'étape g) de balayage dudit nanoinjecteur (100) est mise en oeuvre avec une vitesse inférieure à 40 µm/s.

13. Procédé de dépôt selon l'une quelconque des revendications 9 à 12, comprenant en outre les étapes suivantes :
h) contrôle, par ledit moyen de contrôle (148) dudit résonateur mécanique (120), au moins dudit contact entre ladite protubérance (104) et ladite première couche et de ladite fréquence d'oscillation (fi),
i) dépôt d'une deuxième couche sur ladite première couche,
j) répétition des étapes précédentes h) et i) jusqu'à obtenir une épaisseur souhaitée.

14. Procédé de dépôt selon l'une quelconque des revendications 8 à 13, selon lequel l'écart entre ladite position basse et ladite position haute est compris entre 1 nm et 1 µm.

## Patentansprüche

1. System (10) zum kontrollierten Abscheiden eines Fluids auf ein Substrat (20) für die additive Fertigung, das System umfassend:
- einen Nanoinjektor (100), umfassend:
▪ ein Reservoir (102), das für ein Aufbewahren des Fluids bestimmt ist,
▪ einen Vorsprung (104), der nicht verformbar ist und eine Ausstoßöffnung (108) zum Extrahieren des Fluids aus dem Reservoir (102) aufweist,
- einen mechanischen Resonator (120), der an dem Nanoinjektor (100) befestigt ist, wobei der mechanische Resonator (120) angepasst ist, um einen Kontakt zwischen dem Vorsprung (104) und dem Substrat (20) zu erfassen,
- ein Steuermittel (148) des mechanischen Resonators (120), das verbunden ist mit:
- einem Erregungsmittel (142) des mechanischen Resonators (120), das angepasst ist, um den mechanischen Resonator (120) mit einer Schwingungsfrequenz (fi) in Schwingung zu versetzen, sodass der Vorsprung (104) zwischen einer niedrigen Position, in der der Vorsprung (104) mit dem Substrat (20) in Kontakt steht, und einer hohen Position, in der der Vorsprung (104) und das Substrat (20) nicht in Kontakt stehen, schwingt, mit
- einem Erfassungsmittel (144), das angepasst ist, um die Schwingung des mechanischen Resonators (120) zu erfassen, und mit
- einem Regulierungsmittel (146), das angepasst ist, um den Kontakt zwischen dem Vorsprung (104) und dem Substrat (20) anzupassen, indem die Schwingung des mechanischen Resonators (120) gesteuert wird, wobei das Regulierungsmittel (146) mit einem ersten Bewegungsmittel (160) für die Regulierung verbunden ist, das mindestens angepasst ist, um, entlang einer Achse z, das Substrat (20) des Nanoninjektors (100) heranzurücken oder zu entfernen.

2. System nach Anspruch 1, wobei der Vorsprung (104) funktionalisiert ist.

3. System nach den Ansprüchen 1 oder 2, wobei die Ausstoßöffnung (108) einen Innendurchmesser zwischen 5 und 300 nm aufweist.

4. System nach einem der Ansprüche 1 bis 3, wobei das erste Bewegungsmittel (160) mit einem zweiten Bewegungsmittel verbunden ist, das angepasst ist, um das Substrat (20) entlang den Achsen x, y, orthogonal zu der Achse z für die Bildung eines Musters zu bewegen, wobei die drei orthogonalen Achsen x, y und z einen direkten Trieder ausbilden.

5. System nach Anspruch 4, wobei das erste Bewegungsmittel (160) und das zweite Bewegungsmittel in einem einzigen Bewegungssystem enthalten sein können.

6. System nach einem der Ansprüche 1 bis 5, wobei das erste Bewegungsmittel (160) und/oder das zweite Bewegungsmittel einen piezoelektrischen Motor umfassen.

7. System nach einem der Ansprüche 1 bis 6, wobei das Reservoir (102) mit einem externen Reservoir verbunden ist.

8. Verfahren zum Abscheiden eines Fluids auf ein Substrat für die additive Fertigung, das Verfahren umfassend die folgenden Schritte:
a) Bereitstellen eines Systems (10 nach einem der Ansprüche 1 bis 7,
b) Versetzen in kontrollierte Schwingung des Vorsprungs (104) durch Erregen des mechanischen Resonators (120) durch das Erregungsmittel (142) zum Versetzen des mechanischen Resonators (120) in Schwingung mit einer Schwingungsfrequenz (fi), wobei sich die Schwingung des mechanischen Resonators (120) auf den Vorsprung (104) auswirkt,
c) Heranrücken des Substrats (20) des Vorsprungs (104) mittels des ersten Bewegungsmittels (160), um einen dynamischen Kontakt zwischen dem Substrat (20) und dem Vorsprung (104) auszubilden, wobei der Vorsprung (104) zwischen einer niedrigen Position, in der der Vorsprung (104) mit dem Substrat (20) in Kontakt steht, und einer hohen Position, in der der Vorsprung (104) und das Substrat (20) nicht in Kontakt stehen, schwingt,
d) Erfassen der Schwingung des mechanischen Resonators (120) durch das Erfassungsmittel (144) zum Beobachten von Variationen von Schwingungen bei dem Kontakt zwischen dem Vorsprung (104) und dem Substrat (20),
e) Anpassen, mittels des Regulierungsmittels (146) und in Abhängigkeit von Variationen von Schwingungen, des dynamischen Kontakts zwischen dem Vorsprung (104) und dem Substrat (20), um einen Meniskus von Fluid zwischen dem Vorsprung (104) und dem Substrat (20) auszubilden,
f) Abscheiden des Fluids auf das Substrat (20) über die Ausstoßöffnung (108) bei dem Kontakt zwischen dem Vorsprung (104) und dem Substrat (20).

9. Verfahren nach Anspruch 8, umfassend ferner einen Schritt g) eines Abtastens des Nanoinjektors (100) auf dem Substrat (20) entlang einer Bahn, die in Echtzeit modifizierbar ist, zum Bilden einer ersten Schicht.

10. Verfahren zum Abscheiden nach Anspruch 9, wobei der Schritt des Abtastens g) durchgeführt wird, indem der konstante und vordefinierte Kontakt zwischen dem Vorsprung (104) und dem Substrat (20) erhalten wird.

11. Verfahren zum Abscheiden nach den Ansprüchen 9 oder 10, umfassend ferner einen Schritt eines Verfestigens der ersten Schicht.

12. Verfahren zum Abscheiden nach einem der Ansprüche 9 bis 11, wobei der Schritt g) des Abtastens des Nanoinjektors (100) mit einer Geschwindigkeit von weniger als 40 µm/s durchgeführt wird.

13. Verfahren zum Abscheiden nach einem der Ansprüche 9 bis 12, umfassend ferner die folgenden Schritte:
h) Steuern, durch das Steuermittel (148) des mechanischen Resonators (120), mindestens des Kontakts zwischen dem Vorsprung (104) und der ersten Schicht und der Schwingungsfrequenz (fi),
i) Abscheiden einer zweiten Schicht auf die erste Schicht,
j) Wiederholen der vorstehenden Schritte h) und i), bis eine gewünschte Dicke erhalten wird.

14. Verfahren zum Abscheiden nach einem der Ansprüche 8 bis 13, wobei die Abweichung zwischen der niedrigen Position und der hohen Position zwischen 1 nm und 1 µm liegt.

## Claims

1. A system (10) for depositing a fluid onto a substrate (20) in a controlled manner for additive manufacturing, said system comprising:
- a nanoinjector (100) comprising:
• a tank (102) for storing said fluid,
• a non-deformable projection (104) having an ejection opening (108) for extracting said fluid from said tank (102),
- a mechanical resonator (120) attached to said nanoinjector (100), said mechanical resonator (120) being suitable for detecting contact between said projection (104) and said substrate (20),
- a means (148) for controlling said mechanical resonator (120), which control means is connected to:
- a means (142) for energizing said mechanical resonator (120), which energization means is suitable for making said mechanical resonator (120) oscillate at an oscillation frequency (fi), such that said projection (104) oscillates between a low position in which said projection (104) is in contact with said substrate (20) and a high position in which said projection (104) and said substrate (20) are not in contact,
- a detector means (144) suitable for detecting said oscillation of said mechanical resonator (120), and
- a regulating means (146) suitable for adjusting said contact between said projection (104) and said substrate (20) by controlling said oscillation of said mechanical resonator (120), said regulating means (146) being connected to a first movement means (160) for said regulation, which movement means is suitable for at least bringing together or moving apart, along a z-axis, said substrate (20) and said nanoinjector (100).

2. The system according to claim 1, wherein said projection (104) is functionalized.

3. The system according to claims 1 or 2, wherein said ejection opening (108) has an inner diameter of between 5 and 300 nm.

4. The system according to any of claims 1 to 3, wherein said first movement means (160) is connected to a second movement means suitable for moving said substrate (20) along the x and y axes orthogonal to the z axis so as to create a pattern, said three orthogonal axes x, y and z forming a direct trihedron.

5. The system according to claim 4, wherein the first movement means (160) and the second movement means can be comprised in a single movement system.

6. The system according to any of claims 1 to 5, wherein said first movement means (160) and/or said second movement means include a piezoelectric motor.

7. The system according to any of claims 1 to 6, wherein said tank (102) is connected to an external tank.

8. A method for depositing a fluid onto a substrate for additive manufacturing, said method comprising the following steps:
a) providing a system (10) as defined by any of claims 1 to 7,
b) oscillating said projection (104) in a controlled manner by energizing said mechanical resonator (120) by means of said energization means (142) in order to make said mechanical resonator (120) oscillate at an oscillation frequency (fi), said oscillation of said mechanical resonator (120) being transmitted to said projection (104),
c) moving said substrate (20) closer to said projection (104) by means of said first movement means (160) so as to create dynamic contact between said substrate (20) and said projection (104), said projection (104) oscillating between a low position in which said projection (104) is in contact with said substrate (20) and a high position in which said projection (104) and said substrate (20) are not in contact,
d) detecting said oscillation of said mechanical resonator (120) by means of said detector means (144) in order to observe oscillation variations during contact between said projection (104) and said substrate (20),
e) adjusting, by means of said regulating means (146) and on the basis of oscillation variations, the dynamic contact between said projection (104) and said substrate (20) so as to form a fluid meniscus between said projection (104) and said substrate (20),
f) depositing the fluid onto said substrate (20) via said ejection opening (108) during contact between said projection (104) and said substrate (20).

9. The method according to claim 8, comprising a further step g) of sweeping said nanoinjector (100) over said substrate (20) along a trajectory, modifiable in real time, in order to produce a first layer.

10. The depositing method according to claim 9, wherein said sweeping step g) is implemented by maintaining said constant and predetermined contact between said projection (104) and said substrate (20).

11. The depositing method according to claims 9 or 10, further comprising a step of solidifying said first layer.

12. The depositing method according to any of claims 9 to 11, wherein the step g) of sweeping said nanoinjector (100) is implemented at a rate lower than 40 µm/s.

13. The depositing method according to any of claims 9 to 12, further comprising the following steps:
h) controlling, by means of said control means (148) for said mechanical resonator (120), at least said contact between said projection (104) and said first layer and said oscillation frequency (fi),
i) depositing a second layer onto said first layer,
j) repeating the preceding steps h) and i) until a desired thickness is obtained.

14. The depositing method according to any of claims 8 to 13, wherein the spacing between said low position and said high position is between 1 nm and 1 µm.
